# EUROPÄISCHE PATENTSCHRIFT

(11) **EP 2 738 398 B1**
(45) Veröffentlichungstag und Bekanntmachung des Hinweises auf die Patenterteilung: **09.01.2019**
(21) Anmeldenummer: 13188339.9
(22) Anmeldetag: 11.10.2013
(51) Int. Cl.: F16B 2/20, F16B 2/22, F16B 5/06

(54) **Vorrichtung zum lösbaren spielfreien Befestigen eines Anbauteils an einem Trägerteil**
Device for detachably securing an attachment to a support with no play
Dispositif de fixation sans jeu amovible d'une pièce rapportée montée sur un élément de support

(30) Priorität: 28.11.2012 DE 102012221732
(43) Veröffentlichungstag der Anmeldung: 04.06.2014
(73) Patentinhaber: A. RAYMOND et Cie, 38000 Grenoble (FR)
(72) Erfinder: Hauser, Ingo, 79400 Kandern (DE)
(74) Vertreter: König Szynka Tilmann von Renesse Patentanwälte Partnerschaft mbB

(56) Entgegenhaltungen:
- JP-A- 2010 276 031

## Beschreibung

Die Erfindung betrifft eine Vorrichtung zum lösbaren spielfreien Befestigen eines Anbauteils an einem Trägerteil.

Eine aus EP 1 046 825 A2 vorbekannte Vorrichtung verfügt über ein eine Deckplatte aufweisendes Fußteil, das mit zwei jeweils mit einer Haltenase ausgebildete, in radialer Richtung biegsamen Federarmen ausgestattet ist, mit denen ein in einem Trägerteil ausgebildeter Randbereich einer Durchsteckausnehmung hintergreifbar ist. Weiterhin ist das Fußteil mit einer den Federarmen gegenüber liegenden Anschlagswand sowie mit zwei in einer Endmontageanordnung sperrenden Sicherungsnasen ausgestattet, die das Fußteil durch eine gegenüber der Haltekraft der Haltenasen höhere Auszugskraft an einem Trägerteil sichern. Die sperrenden Sicherungsnasen sind über einen Verbindungssteg mit der Deckplatte verbunden sowie seitlich ausgestellt, wobei sie bei Einbiegen in Richtung der zwischen ihnen liegenden Anschlagswand mit der Anschlagswand fluchten, so dass die Vorrichtung aus der Durchsteckausnehmung entfernbar ist. Der spielfreie Sitz der vorbekannten Vorrichtung wird durch die Randseiten der Federarme sowie die Randseite der Anschlagswand sichergestellt.

Der Erfindung liegt die Aufgabe zugrunde, eine Vorrichtung der eingangs genannten Art anzugeben, die sich in einer Endmontageanordnung durch einen stabilen Sitz in einer Durchsteckausnehmung eines Trägerteils auszeichnet sowie verhältnismäßig einfach in eine Demontageanordnung überführbar ist, in der sie jedoch weiterhin verliersicher und gegen relativ hohe Auszugskräfte widerstandsfähig an einem Trägerteil verbleibt.

Diese Aufgabe wird erfindungsgemäß mit den Merkmalen des Patentanspruches 1 gelöst.

Durch das Ausbilden der oder jeder sperrenden Sicherungsnase an der Anschlagswand ist aufgrund der gegenüber der Haltekraft der Haltenasen höheren Auszugskraft der oder jeder Sicherungsnase in einer Demontageanordnung ein sicherer Halt der erfindungsgemäßen Vorrichtung an einem Trägerteil sichergestellt. In dieser Demontagestellung hält die Verspannzunge die erfindungsgemäße Vorrichtung weiterhin im Wesentlichen formschlüssig und spielfrei in einer Durchsteckausnehmung, wobei durch die Biegsamkeit der Verspannzunge in radialer Richtung die erfindungsgemäße Vorrichtung nach Einbiegen der Verspannzunge nach radial innen aus der Durchsteckausnehmung ausklinkbar ist.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispiels mit Bezug auf die Figuren der Zeichnung.

Es zeigen:
- Fig. 1: in einer perspektivischen Ansicht ein Ausführungsbeispiel einer erfindungsgemäßen Vorrichtung,
- Fig. 2: das Ausführungsbeispiel gemäß Fig. 1 in einem Längsschnitt während eines Einführvorgangs in eine in einem Trägerteil ausgebildete Durchsteckausnehmung,
- Fig. 3: in einem Längsschnitt entsprechend Fig. 2 das Ausführungsbeispiel gemäß Fig. 1 in einer Endmontageanordnung,
- Fig. 4: in einem Querschnitt das Ausführungsbeispiel gemäß Fig. 1 in der Endmontageanordnung gemäß Fig. 3,
- Fig. 5: in einem Querschnitt entsprechend Fig. 4 das Ausführungsbeispiel gemäß Fig. 1 in einer Demontageanordnung,
- Fig. 6: in einem Längsschnitt entsprechend Fig. 2 und Fig. 3 das Ausführungsbeispiel gemäß Fig. 1 in der Demontageanordnung gemäß Fig. 5 sowie ein Demontagewerkzeug, mit dem die erfindungsgemäße Befestigungsvorrichtung aus der Demontageanordnung von einem Trägerteil lösbar ist,
- Fig. 7: in einer Detailansicht in einem Schnitt durch ein Demontagewerkzeug das Einwirken desselben auf das Ausführungsbeispiel gemäß Fig. 1 zum Ausklinken aus einer Demontageanordnung,
- Fig. 8: in einem Längsschnitt entsprechend Fig. 6 das Ausführungsbeispiel gemäß Fig. 1 beim Überführen aus der Demontageanordnung zum Entfernen von einem Trägerteil und
- Fig. 9: in einem Querschnitt entsprechend Fig. 4 und Fig. 5 das Ausführungsbeispiel gemäß Fig. 1 beim Überführen aus der Demontageanordnung gemäß Fig. 8.

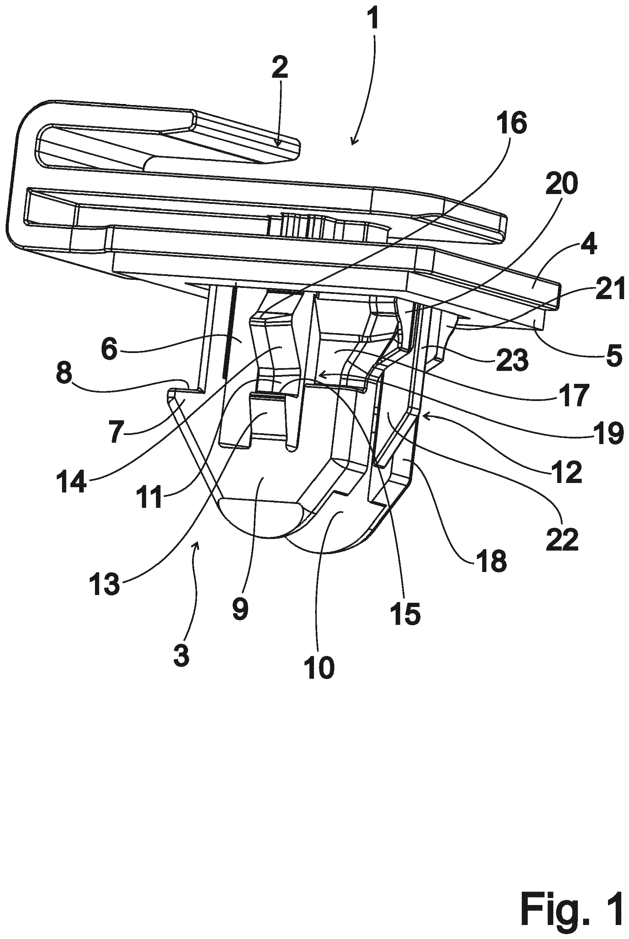

Fig. 1 zeigt in einer perspektivischen Ansicht ein zweckmäßigerweise aus einem hartelastischen Kunststoffmaterial hergestelltes Ausführungsbeispiel einer erfindungsgemäßen Vorrichtung. Das Ausführungsbeispiel gemäß Fig. 1 verfügt über ein Kopfteil 1, das mit einer Befestigungsstruktur 2 ausgestattet ist, die zum formschlüssigen Verbinden mit einem in Fig. 1 nicht dargestellten Anbauteil eingerichtet ist. Weiterhin ist das Ausführungsbeispiel gemäß Fig. 1 mit einem sich in axialer Richtung erstreckenden Fußteil 3 ausgebildet, das eine im Wesentlichen rechteckförmige plane Deckplatte 4 aufweist, an der die Befestigungsstruktur 2 angeformt ist. Auf der der Befestigungsstruktur 2 abgewandten Seite der Deckplatte 4 ist in Fig. 1 ein elastisch verformbarer Quetschring 5 dargestellt, der die Deckplatte 4 nahe ihres Außenrandes umrandet.

Bei dem in Fig. 1 dargestellten Ausführungsbeispiel ist das Fußteil 3 mit einer rechtwinklig zu der Deckplatte 4 ausgerichteten, sich in der axialen Richtung des Fußschafts 3 erstreckenden Anschlagswand 6 ausgestattet, die in einem von der Deckplatte 4 abgewandten Endbereich eine starre sperrende Sicherungsnase 7 trägt, deren der Deckplatte 4 zugewandte Hintergriffsfläche 8 parallel zu der Deckplatte 4 und rechtwinklig zu der Anschlagswand 6 ausgerichtet ist. Die Anschlagswand 6 ist mit einer ersten Fußwand 9 und mit einer zweiten Fußwand 10 verbunden, die jeweils rechtwinklig zu der Anschlagswand 6 ausgerichtet sind und die sich in der axialen Richtung des Fußteils 3 rechtwinklig von der Deckplatte 4 weg erstrecken. Die Fußwände 9, 10 erstrecken sich auf der der Sicherungsnase 7 abgewandten Seite von der Anschlagswand 6 weg und sind zweckmäßigerweise auf der der Deckplatte 4 abgewandten Seite angeschrägt ausbildet, um das Einführen der erfindungsgemäßen Vorrichtung in eine in Fig.1 nicht dargestellten Trägerteil ausgebildeten Durchsteckausnehmung zu vereinfachen.

Jeweils in einem Abstand von der Anschlagswand 6 ist an der ersten Fußwand 9 ein erster Federarm 11 und an der zweiten Fußwand 10 ein zweiter Federarm 12 angeformt, die sich von der jeweiligen Fußwand 9, 10 weg in Richtung der Deckplatte 4 erstrecken und in radialer Richtung des Fußschafts 3 elastisch biegsam sind. Jeder Federarm 11, 12 ist mit einer Sicherungsnase 13, die in der gleichen Ebene wie die an der Anschlagswand 6 ausgebildete sperrende Sicherungsnase 7 liegt, und mit einer Haltenase 14 ausgebildet, die in axialer Richtung des Fußschafts 3 zwischen der jeweiligen an den betreffenden Federarmen 11, 12 ausgebildeten Sicherungsnase 13 und der Deckplatte 4 angeordnet ist.

Die an den Federarmen 11, 12 ausgebildeten Sicherungsnasen 13 weisen Hintergriffsflächen 15 auf, die wie die Hintergriffsfläche 8 der an der Anschlagswand 6 ausgebildeten sperrenden Sicherungsnase 7 parallel zu Deckplatte 4 und damit rechtwinklig zu der axialen Richtung des Fußteils 3 ausgerichtet sind. An den Haltenasen 14 ausgebildete Hinterrastflächen 16 sind von radial innen nach radial außen von der Deckplatte 4 wegweisend abgeschrägt ausgebildet, so dass eine durch die Hinterrastflächen 16 erzeugte Haltekraft zum Befestigen der erfindungsgemäßen Vorrichtung in einer Endmontageanordnung geringer als eine durch die Hintergriffsflächen 8, 15 der Sicherungsnasen 7, 13 bewirkte Auszugskraft zum Ausführen aus einer Demontageanordnung ist.

Weiterhin lässt sich der Darstellung gemäß Fig. 1 entnehmen, dass in einem Abstand von den Federarmen 11, 12 auf deren der Anschlagswand 6 abgewandten Seite an der ersten Fußwand 9 eine erste Verbindungswand 17 und an der zweiten Fußwand 10 eine zweite Verbindungswand 18 angeformt sind, die mit ihren der jeweiligen Fußwand 9, 10 abgewandten Ende mit der Deckplatte 4 in Verbindung stehen. Jede Verbindungswand 17, 18 weist in axialer Richtung in Höhe der Haltenasen 14 eine Einführnut 19 auf, in die, wie weiter unten erläutert, ein in Fig. 1 nicht dargestelltes Demontagewerkzeug einführbar ist.

Weiterhin weist das erfindungsgemäße Ausführungsbeispiel gemäß Fig. 1 einen ersten Formschlusssockel 20 und einen zweiten Formschlusssockel 21 auf, die an der Deckplatte 4 sowie an jeweils einer Verbindungswand 17, 18 auf deren der Anschlagswand 6 abgewandten Seite ausgebildet sind und die zusammen mit der Anschlagswand 6 einen starren Formschlussblock bilden. Zwischen den Formschlusssockeln 20, 21 liegend ist an der Deckplatte 4 eine mit einem rechteckigen Querschnitt ausgebildete, sich rechtwinklig von der Deckplatte 4 weg in Richtung der Fußwände 9, 10 erstreckende Verspannzunge 22 angeformt, die in radialer Richtung des Fußschafts 3 elastisch verformbar ist und die in relaxierter Anordnung mit einer schmalen Außenkante 23 bevorzugt bündig mit den Formschlusssockeln 20, 21 abschließt.

Die schmale Außenkante 23 der Verspannzunge 22 erstreckt sich mit gleichbleibendem Querschnitt in axialer Richtung von der Deckplatte 4 weg über die Ebene hinaus, in der die Hintergriffsflächen 8, 15 der Sicherungsnasen 7, 13 liegen, wobei das von der Deckplatte 4 abgewandte freie Ende der Verspannzunge 22 entsprechend den Fußwänden 9, 10 zum Erleichtern des Einführens der erfindungsgemäßen Vorrichtung in eine in einem Trägerteil ausgebildete Durchsteckausnehmung ebenfalls angeschrägt ist.

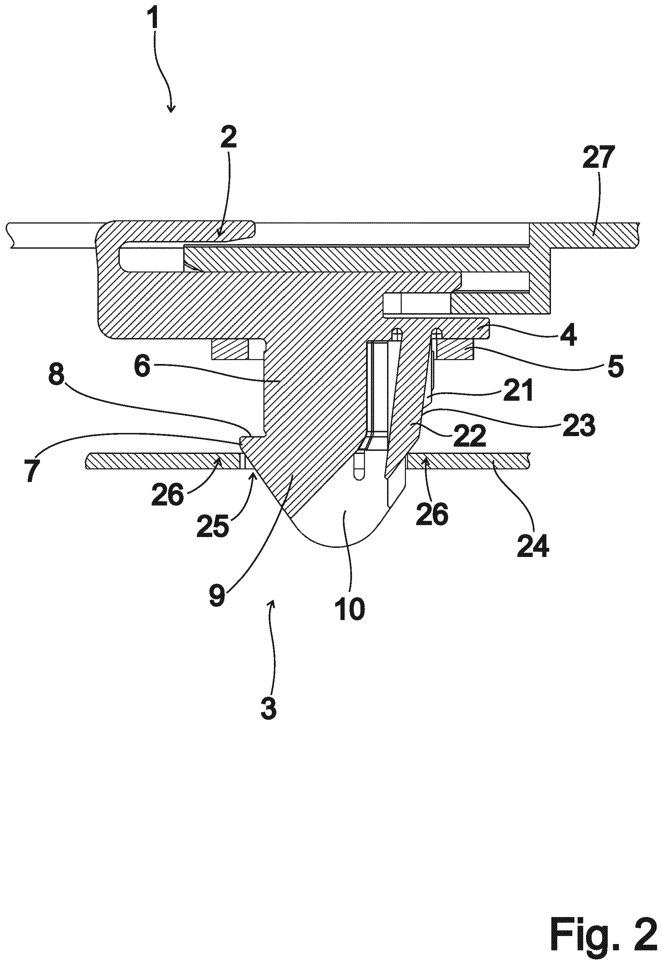

Fig. 2 zeigt in einem Längsschnitt, der sich durch die Verspannzunge 22 und die Anschlagswand 6 erstreckt, das Ausführungsbeispiel gemäß Fig. 1 beim Einfügen in eine in einem Trägerteil 24 ausgebildete Durchsteckausnehmung 25, deren Randbereich 26 so dimensioniert ist, dass die Durchsteckausnehmung 25 mit entsprechenden, durch die Anschlagswand 6 und die Formschlusssockel 20, 21 gebildeten Formschlussblock bestimmten Dimensionen zum spielfreien Befestigen eines in der Darstellung gemäß Fig. 2 mit der Befestigungsstruktur 2 des Kopfteils 1 in Verbindung stehenden Anbauteils 27 eingerichtet ist. Aus Fig. 2 ist ersichtlich, dass zum Einfügen der erfindungsgemäßen Vorrichtung in die Durchsteckausnehmung 25 die Verspannzunge 22 so weit radial nach innen biegsam ist, bis die an der Anschlagswand 6 ausgebildete sperrende Sicherungsnase 7 durch die Durchsteckausnehmung 25 durchgetreten ist.

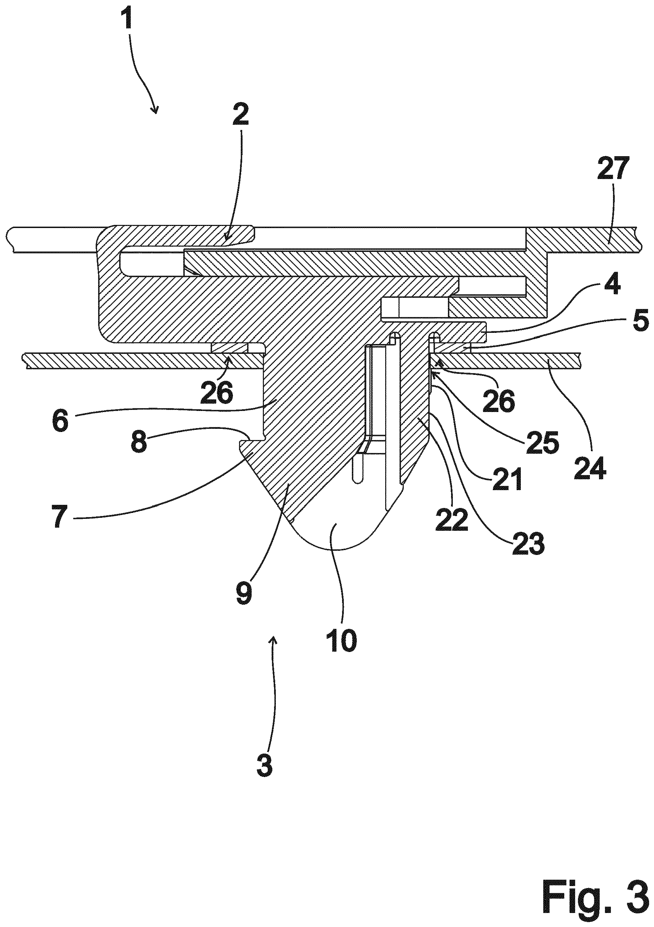

Fig. 3 zeigt in einem Längsschnitt entsprechend Fig. 2 das Ausführungsbeispiel gemäß Fig. 1 in einer Endmontageanordnung, in der die an der Anschlagswand 6 ausgebildete sperrende Sicherungsnase 7 durch die Durchsteckausnehmung 25 durchgetreten ist und die Verspannzunge 22 wieder in relaxierter Anordnung ist. Aus Fig. 3 ist ersichtlich, dass in der Endmontageanordnung das Anbauteil 27 aufgrund des Formschlusses der Anschlagswand 6 sowie der Formschlusssockel 20, 21 mit dem Randbereich 26 der Durchsteckausnehmung 25 in der Ebene des Trägerteils 24 spielfrei des Fußschafts 3 mit dem Trägerteil 24 verbunden ist.

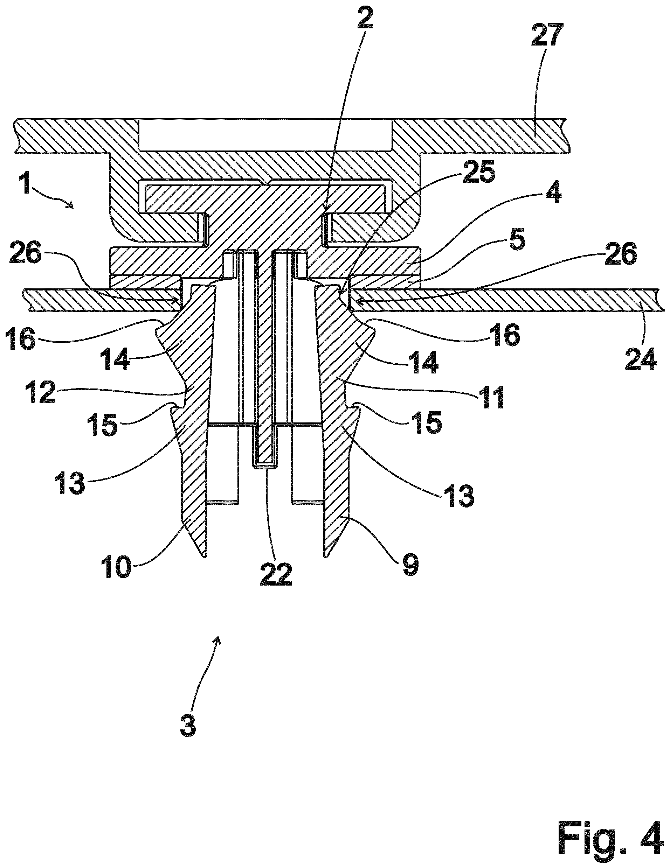

Fig. 4 zeigt in einem Querschnitt, dessen Schnittebene rechtwinklig zu der Schnittebene des Längsschnittes gemäß Fig. 2 und Fig. 3 ausgerichtet ist, das Ausführungsbeispiel gemäß Fig. 1 in der Endmontageanordnung gemäß Fig. 3. Aus Fig. 4 ist ersichtlich, dass in der Endmontageordnung die Hinterrastflächen 16 der Haltenasen 14 der Federarme 11, 12 den Randbereich 26 der Durchsteckausnehmung 25 hinterrasten und auf Grund deren schrägen Ausrichtung neben einer die Verschiebbarkeit der erfindungsgemäßen Vorrichtung in axialer Richtung entgegen der durch die Haltenasen 14 hervorgerufenen Haltekraft hemmenden Wirkung bei einer wie in Fig. 4 dargestellten Vorspannung der Federarme 11, 12 nach radial außen die Deckplatte 4 unter Verformen des Quetschringes 5 in Richtung des Trägerteils 24 zieht. Dadurch ist das Anbauteil 27 auch in axialer Richtung des Fußschafts 3 spielfrei mit dem Trägerteil 24 verbunden.

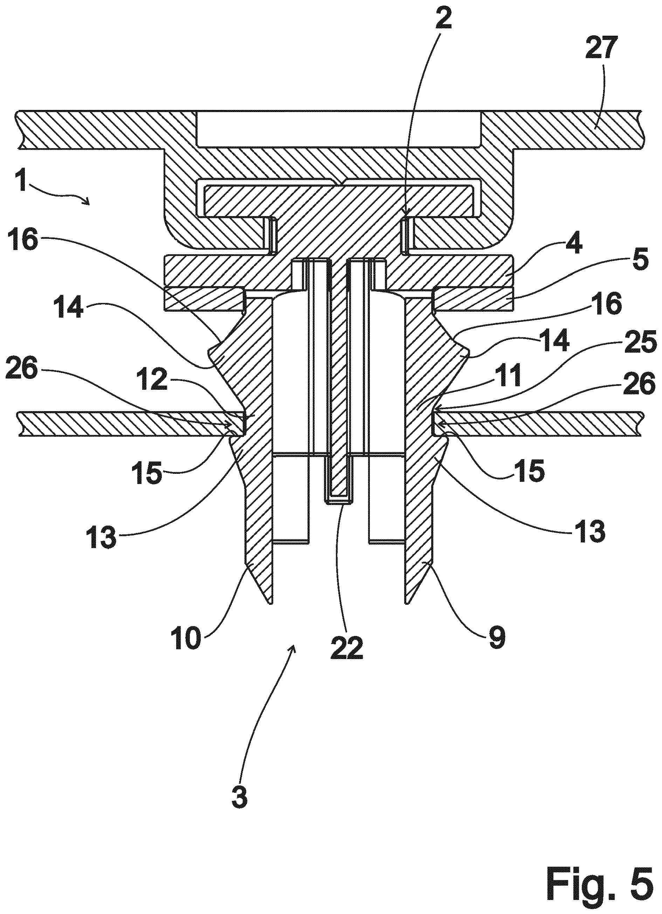

Fig. 5 zeigt in einem Querschnitt entsprechend Fig. 4 das Ausführungsbeispiel gemäß Fig. 1 nach Aufwenden einer gegenüber der durch die Haltenasen 14 ausgeübten Haltekraft höheren Demontagekraft mit Anschlag der an den Federarmen 11, 12 ausgebildeten Sicherungsnasen 13 an dem Randbereich 26 Durchsteckausnehmung 25. Aufgrund der rechtwinkligen Ausrichtung der Hintergriffsflächen 8, 15 der Sicherungsnasen 7, 13 ist ohne weitere Maßnahmen ein Ausziehen der erfindungsgemäßen Vorrichtung aus der Demontageanordnung gemäß Fig. 5, von einer die Auszugskraft übersteigenden Zerstörkraft abgesehen, blockiert.

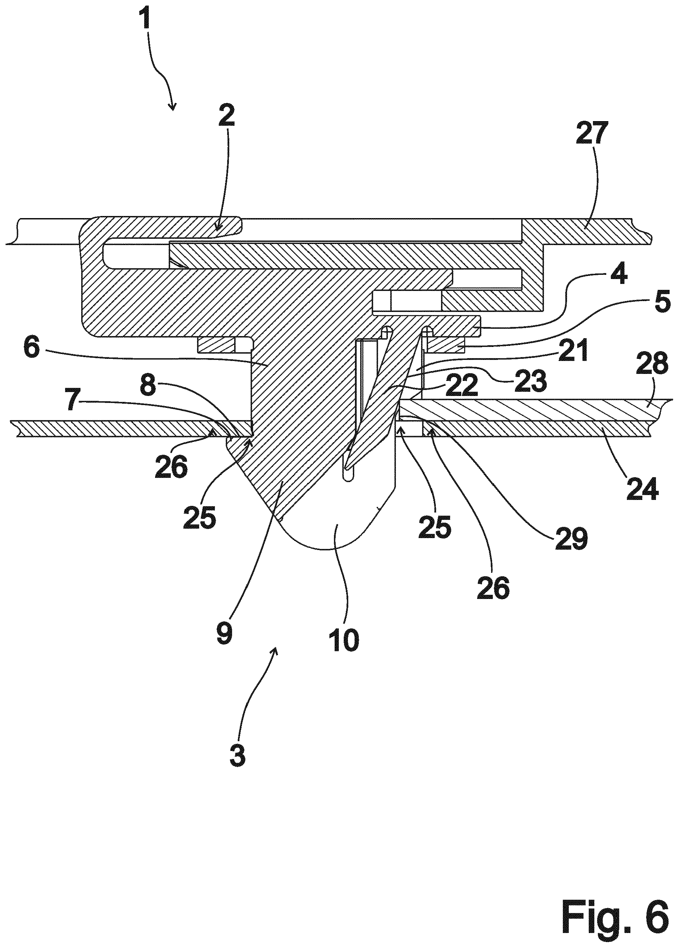

Fig. 6 zeigt in einem Längsschnitt entsprechend Fig. 2 und Fig. 3 das Ausführungsbeispiel gemäß Fig. 1 in der Demontageanordnung gemäß Fig. 5, in der weiterhin die an der Anschlagswand 6 ausgebildete sperrende Sicherungsnase 7 mit ihrer Hintergriffsfläche 8 an den Randbereich 26 der Durchsteckausnehmung 25 anliegt und ein Ausziehen der erfindungsgemäßen Vorrichtung ebenfalls blockiert. Zum Ausklinken der erfindungsgemäßen Vorrichtung aus der Demontageanordnung gemäß Fig. 5 und Fig. 6 ist ein Demontagewerkzeug 28 vorgesehen, das in der Darstellung gemäß Fig. 6 auf die der Deckplatte 4 zugewandte Seite des Trägerteils 24 aufgelegt ist und mit dem beim Ausüben einer nach radial innen wirkenden Spannkraft, die über eine Demontagekante 29 des Demontagewerkzeuges 28 eingeleitet wird, die Verspannzunge 22 im Bereich der Durchsteckausnehmung 25 über einen Weg nach radial innen verschiebbar ist, der der radialen Erstreckung der Hintergriffsfläche 8 der sperrenden Sicherungsnase 7 entspricht, die an der Anschlagswand 6 angeformt ist.

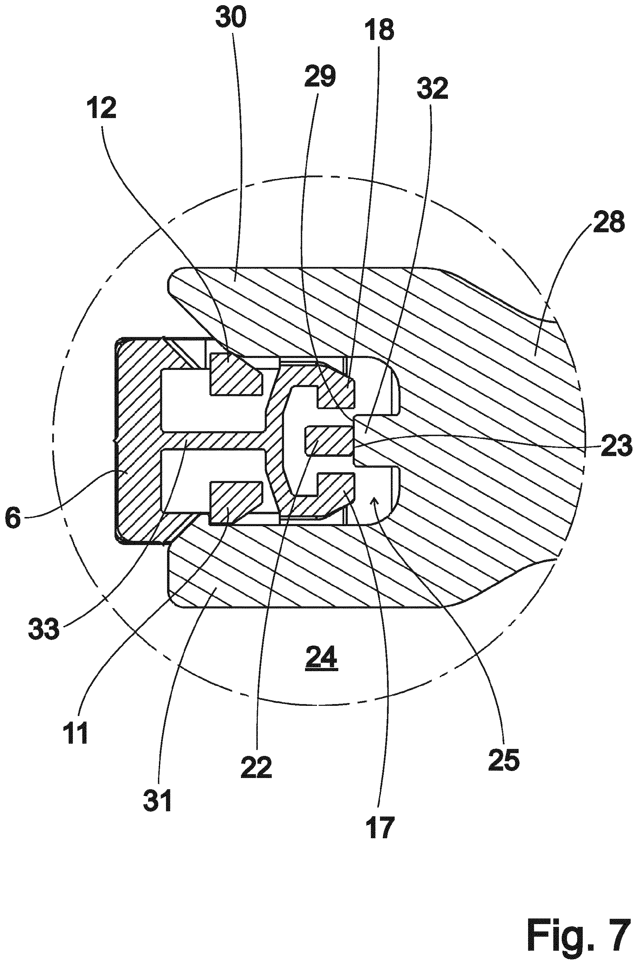

Fig. 7 zeigt in einem Längsschnitt das Demontagewerkzeug 28, wie es mit Randzinken 30, 31 auf die Federarme 11, 12 sowie mit einem Mittelzinken 32 auf die Verspannzunge 22 einwirkt. Zum einen ist ersichtlich, wie die an dem Mittelzinken 32 ausgebildete Demontagekante 29 die Verspannzunge 22 durch Einwirken auf deren Außenkante 23 nach radial innen zwischen die Verbindungswände 17, 18 eindrückt, während randseitige Demontagezinken 30, 31 auf die Federarme 11, 12 einwirken und diese ebenfalls nach radial innen bewegen. Überdies lässt sich der Darstellung gemäß Fig. 7 entnehmen, dass das Fußteil 3 eine T-artige Versteifungsstruktur 33 aufweist, die mit der Anschlagswand 6 sowie mit den Verbindungswänden 17, 18 verbunden ist.

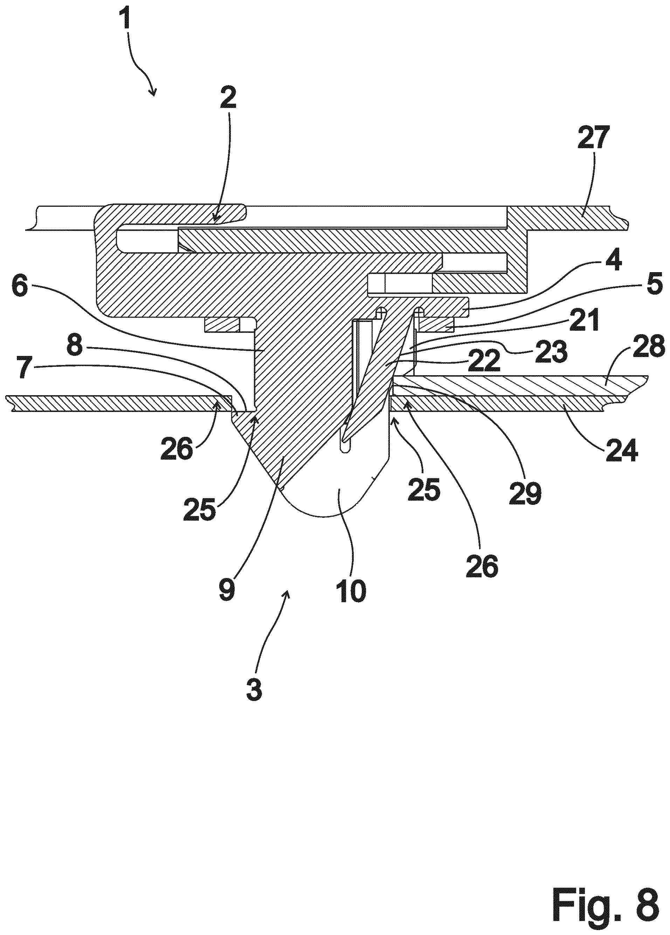

Fig. 8 zeigt in einem Längsschnitt entsprechend Fig. 6 das Ausführungsbeispiel gemäß Fig. 1 in einer gegenüber der Anordnung gemäß Fig. 6 axial versetzten Anordnung, in der die Hintergriffsfläche 8 der Sicherungsnase 7, die an der Anschlagswand 6 angeformt ist, nunmehr eingriffsfrei mit dem Randbereich 26 der Durchsteckausnehmung 25 ist.

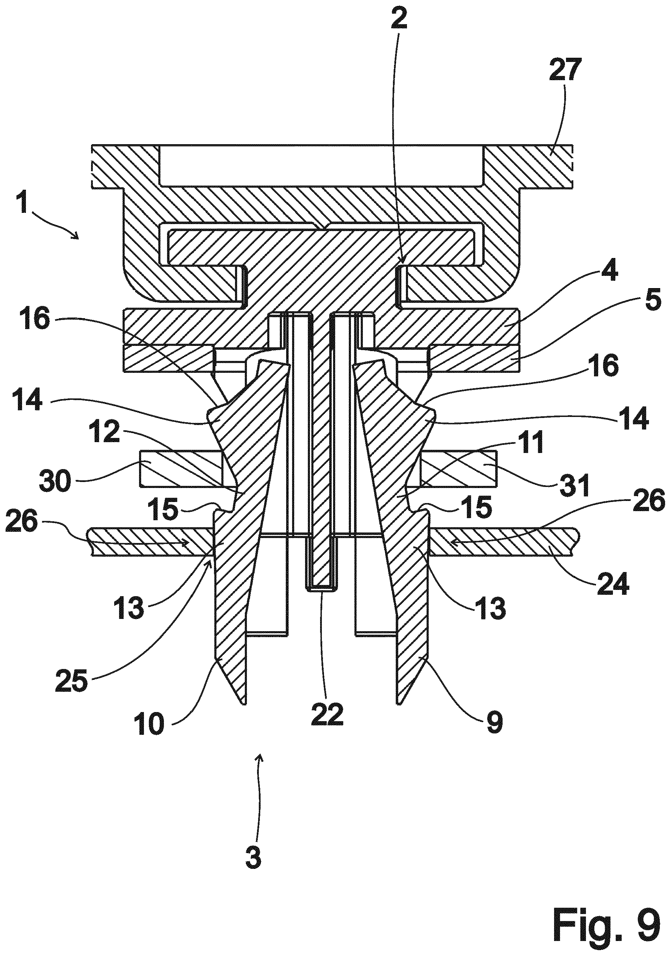

Fig. 9 zeigt in einem Querschnitt entsprechend Fig. 4 und Fig. 5 das Ausführungsbeispiel gemäß Fig. 1 beim Ausklinken der erfindungsgemäßen Vorrichtung aus der Durchsteckausnehmung 25 zum Entfernen des Anbauteils 27 von dem Trägerteil 26 mit Hilfe des Demontagewerkzeuges 28. Aus Fig. 9 lässt sich erkennen, dass der Abstand der Demontagezinken 30, 31 so eingerichtet ist, dass die Demontagezinken 30, 31 in die Einführnuten 19 der Verbindungswände 17, 18 einführbar sind und bei Kontakt mit den Federarmen 11, 12 in einem in axialer Richtung zwischen den an den Federarmen 11, 12 ausgebildeten Sicherungsnasen 13 und den Haltenasen 14 liegenden Bereich die Federarme 11, 12 so weit nach radial innen bewegen, dass der Hintergriff der an den Federarmen 11, 12 ausgebildeten Sicherungsnasen 13 ausgebildeten Hintergriffsflächen 15 mit dem Randbereich 26 der Durchsteckausnehmung 25 gelöst und die erfindungsgemäße Vorrichtung aus der Demontageanordnung entgegen der Einführrichtung von dem Trägerteil 24 abnehmbar ist.

## Patentansprüche

1. Vorrichtung zum lösbaren spielfreien Befestigen eines Anbauteils (27) an einem Trägerteil (24) mit einem eine Deckplatte (4) aufweisenden, sich in einer axialen Richtung erstreckenden Fußteil (3), das über zwei jeweils mit einer Haltenase (14) ausgebildete, in radialer Richtung biegsame Federarme (11, 12) verfügt, mit denen ein in einem Trägerteil (24) ausgebildeter Randbereich (26) einer Durchsteckausnehmung (25) hintergreifbar ist, und das wenigstens eine den Federarmen (11, 12) gegenüber liegende Anschlagswand (6) sowie wenigstens eine in einer Endmontageanordnung sperrende Sicherungsnase (7) aufweist, die ausgebildet ist, das Fußteil (3) durch eine gegenüber der Haltekraft der Haltnasen (14) höhere Auszugskraft zu sichern, wobei die oder jede sperrende Sicherungsnase (7) an der Anschlagswand (6) ausgebildet ist, wobei auf der der Anschlagswand (6) gegenüber liegenden Seite der Federarme (11, 12) wenigstens ein Formschlusssockel (20, 21) vorhanden ist, der sich in axialer Richtung des Fußteils (3) bis zwischen die Haltnasen (14) und die oder jede sperrende Sicherungsnase (7) erstreckt, und wobei auf der der Anschlagswand (6) gegenüber liegenden Seite der Federarme (11, 12) wenigstens eine in radialer Richtung des Fußteils (3) biegsame Verspannzunge (22) vorhanden ist, die sich in axialer Richtung des Fußteils (3) über die oder jede sperrende Sicherungsnase (7) hinaus erstreckt, wobei die Verspannzunge (22) an der Deckplatte (4) angeformt ist und in relaxierter Anordnung bündig mit dem oder jedem Formschlusssockel (20, 21) der Federarme (11, 12) abschließt oder gegenüber dem oder jedem Formschlusssockel (20, 21) nach radial innen über einen Versatzweg versetzt ist, der kleiner als die radiale Erstreckung der oder jeder an der Anschlagswand (6) ausgebildeten sperrenden Sicherungsnase (7) ist.

2. Vorrichtung nach Anspruch 1, **dadurch gekennzeichnet, dass** sich eine Außenkante (23) der Verspannzunge (22) in axialer Richtung von der Deckplatte (4) weg über die Ebene hinaus erstreckt, in der die Hintergriffsflächen (8, 15) der Sicherungsnasen (7, 13) liegen.

3. Vorrichtung nach Anspruch 1 oder Anspruch 2, **dadurch gekennzeichnet, dass** jeder Federarm (11, 12) über eine Sicherungsnase (13) verfügt, die ausgebildet ist, durch eine gegenüber der Haltekraft der Haltnasen (14) höhere Auszugskraft das Fußteil (3) zu sichern und die in der gleichen Ebene wie die oder jede an der Anschlagswand (6) ausgebildete sperrende Sicherungsnase (7) liegt.

4. Vorrichtung nach einem der Ansprüche 1 bis 3, **dadurch gekennzeichnet, dass** zwei Formschlusssockel (20, 21) vorhanden sind, zwischen denen die Verspannzunge (22) angeordnet ist.

5. Vorrichtung nach Anspruch 4, **dadurch gekennzeichnet, dass** die oder jede Anschlagswand (6) und jeweils ein Formschlusssockel (20, 21) über jeweils eine der Deckplatte (4) gegenüber liegende Fußwand (9, 10) sowie über eine zwischen der Fußwand (9, 10) und der Deckplatte (4) angeordnete Verbindungswand (17, 18) miteinander verbunden sind.

6. Vorrichtung nach Anspruch 5, **dadurch gekennzeichnet, dass** an jeder Fußwand (9, 10) ein Federarm (11, 12) angeformt ist.

7. Vorrichtung nach Anspruch 5 oder Anspruch 6, **dadurch gekennzeichnet, dass** jede Verbindungswand (17, 18) in axialer Richtung des Fußschafts (3) zwischen den Haltenasen (14) und den Sicherungsnasen (13) der Federarme (11, 12) eine Einführnut (19) zum Einführen eines Demontagewerkzeugs (28) ausweist, mit dem die oder jede Verspannzunge (22) mit ihrem freien Ende in radialer Richtung innenseitig der Formschlusssockel (20, 21) und der Federarme (11, 12) nach radial innen bewegbar ist.

## Claims

1. Device for the disconnectable, free-of-play fitting of an attachment part (27) to a support part (24), with a cover plate (4) incorporating foot part (3) extending in an axial direction, which has two spring arms (11, 12) bendable in a radial direction, each designed with a holding lug (14), with which an edge area (26) formed in a support part (24) of a through recess (25) can be engaged from behind, and which has at least one abutment wall (6) lying opposite the spring arms (11, 12) as well as a securing lug (7) that is locked in a final assembly arrangement, designed to secure the foot part (3) by means of an extraction force that is greater than the holding force of the holding lugs (14), wherein the or each locking securing lug (7) is formed in the abutment wall (6), wherein at least one form closure plinth (20, 21) is provided on the side of the spring arms (11, 12), opposite the abutment wall (6), which extends in an axial direction of the foot part (3) to between the holding lugs (14) and the or each locking securing lug (7), and wherein at least one tensioning tab (22) bendable in the radial direction of the foot part (3) is provided on the side of the spring arms (11, 12) opposite the abutment wall (6), which extends in an axial direction of the foot part (3) across the or each locking securing lug (7), wherein the tensioning tab (22) is formed on the cover plate (4) and ends flush with the or each form closure plinth (20, 21) of the spring arms (11, 12) in a relaxed arrangement, or is offset radially inwards across an offsetting path that is smaller than the radial expansion of the or each locking securing lug (7) formed on the abutment wall (6) opposite the or each form closure plinth (20, 21).

2. Device according to claim 1, **characterised in that** an outer edge (23) of the tensioning tab (22) extends in an axial direction from the cover plate (4) across the level on which the rear engagement surfaces (8, 15) of the securing lugs (7, 13) lie.

3. Device according to claim 1 or claim 2, **characterised in that** each spring arm (11, 12) has a securing lug (13), which is formed to secure the foot part (3) by means of an extraction force that is greater than the holding force of the holding lugs (14), and which lies on the same level as the or each locking securing lug (7) formed in the abutment wall (6).

4. Device according to one of the claims 1 to 3, **characterised in that** two form closure plinths (20, 21) are provided, between which the tensioning tab (22) is arranged.

5. Device according to claim 4, **characterised in that** the or each abutment wall (6) and one form closure plinth (20, 21) each are connected with each other via a foot wall (9, 10) each lying opposite the cover plate (4) as well as via a connection wall (17, 18) arranged between the foot wall (9, 10) and the cover plate (4).

6. Device according to claim 5, **characterised in that** a spring arm (11, 12) each is formed on each foot wall (9, 10).

7. Device according to claim 5 or claim 6, **characterised in that** each connection wall (17, 18) has an insertion groove (19) for inserting a dismantling tool (28) in an axial direction of the foot shaft (3) between the holding lugs (14) and the securing lugs (13) of the spring arms (11, 12), with which the or each tensioning tab (22) can be moved radially inwards with its free end in a radial direction inside the form closure plinth (20, 21) and the spring arms (11, 12).

## Revendications

1. Dispositif pour la fixation sans jeu détachable d'une pièce rapportée (27) sur une partie de support (24) avec un piètement (3) présentant une plaque de recouvrement (4) et s'étendant dans une direction axiale, qui dispose de deux bras de ressort (11, 12) flexibles dans une direction radiale, respectivement formés avec un bec de retenue (14), avec lesquels une zone périphérique (26) d'une cavité de perforation (25), laquelle zone formée dans une partie de support (24), peut être saisie à l'arrière, et présente au moins une paroi de butée (6) disposée à l'opposé des bras de ressort (11, 12) ainsi qu'au moins une languette (7) bloquante dans un dispositif de fixation finale qui est formé de sorte que le piètement (3) est sécurisé par une force de traction élevée contre la force de retenue des becs de retenue (14), la ou chaque languette (7) bloquante étant formée sur la paroi de butée (6), au moins un socle complémentaire de forme (20, 21), qui s'étend dans une direction axiale du piètement (3) jusqu'entre les becs de retenue (14) et la ou chaque languette (7) bloquante, étant présent sur le côté des bras de ressort (11, 12) opposé de la paroi de butée (6) et au moins une languette de tension (22) flexible dans une direction radiale du piètement (3) sur le côté des bras de ressort (11, 12) opposé de la paroi de butée (6) étant présente, ladite languette de tension bloquante s'étendant au-delà de la ou chaque languette (7) bloquante dans une direction axiale du piètement (3), la languette de tension (22) étant formée sur la plaque de recouvrement (4) et alignant de manière affleurante dans une disposition relâchée avec le ou chaque socle complémentaire de forme (20, 21) des bras de ressort (11, 12) ou étant décalée radialement de l'intérieur d'une course de déplacement par rapport au ou à chaque socle complémentaire de forme (20, 21), ladite course de déplacement étant plus courte que l'étendue radiale de la ou de chaque languette (7) bloquante formée sur la paroi de butée (6).

2. Dispositif selon la revendication 1, **caractérisé en ce qu'**un bord extérieur (23) de la languette de tension (22) s'étend dans une direction axiale de la plaque de recouvrement (4) au-delà du plan dans lequel les surfaces d'engagement par l'arrière (8, 15) des languettes (7, 13) se trouvent.

3. Dispositif selon la revendication 1 ou la revendication 2, **caractérisé en ce que** chaque bras de ressort (11, 12) dispose d'une languette (13) qui est formée afin que le piètement (3) soit sécurisé par une force de traction élevée contre la force de retenue des becs de retenue (14) et qui se trouve dans le même plan que la ou chaque languette (7) bloquante formée sur la paroi de butée (6).

4. Dispositif selon l'une quelconque des revendications 1 à 3, **caractérisé en ce que** deux socles complémentaires de forme (20, 21) sont présents entre lesquels la languette de tension (22) est disposée.

5. Dispositif selon la revendication 4, **caractérisé en ce que** la ou chaque paroi de butée (6) et respectivement un socle complémentaire de forme (20, 21) sont reliés ensemble via respectivement une paroi du pied (9, 10) située à l'opposé de la plaque de recouvrement (4) ainsi que via une paroi de liaison (17, 18) disposée entre la paroi du pied (9, 10) et la plaque de recouvrement (4) .

6. Dispositif selon la revendication 5, **caractérisé en ce qu'**un bras de ressort (11, 12) est formé sur chaque paroi du pied (9, 10).

7. Dispositif selon la revendication 5 ou la revendication 6, **caractérisé en ce que** chaque paroi de liaison (17, 18) présente une rainure d'insertion (19), pour introduire un outil de démontage (28), dans une direction axiale du piètement (3) entre les becs de retenue (14) et les languettes (13) des bras de ressort (11, 12), ledit outil de démontage permettant de déplacer radialement vers l'intérieur la ou chaque languette de tension (22) avec son extrémité libre dans une direction radiale côté intérieur des socles complémentaires de forme (20, 21) et des bras de ressort (11, 12).
